# NEUE EUROPÄISCHE PATENTSCHRIFT

(11) **EP 2 161 494 B2**
(45) Veröffentlichungstag und Bekanntmachung des Hinweises auf die Entscheidung über den Einspruch: **29.04.2020**
(45) Hinweis auf die Patenterteilung: 09.11.2011
(21) Anmeldenummer: 08163803.3
(22) Anmeldetag: 05.09.2008
(51) Int. Cl.: B60Q 1/28, B60Q 1/34, F21S 43/14, F21S 43/239, F21S 43/243, F21S 43/249

(54) **Beleuchtungseinrichtung für ein Kraftfahrzeug**
Lighting device for a motor vehicle
Dispositif d'éclairage pour un véhicule automobile

(43) Veröffentlichungstag der Anmeldung: 10.03.2010
(73) Patentinhaber: HELLA GmbH & Co. KGaA, 59552 Lippstadt (DE)
(72) Erfinder: Roling, Heinrich, 59555, Lippstadt (DE); Rode, Martin, 38122, Braunschweig (DE); Buthe, Guido, 33178, Borchen (DE)

(56) Entgegenhaltungen:
- WO-A-2007/028451
- DE-A1- 3 916 875
- DE-A1- 10 043 660
- DE-A1- 10 052 655
- DE-A1- 19 838 224
- DE-A1-102005 032 921
- DE-A1-102005 043 992
- DE-A1-102005 048 498
- DE-A1-102006 027 970
- DE-A1-102007 005 779
- DE-U1- 20 018 905
- JP-A- 2006 236 588

## Beschreibung

Die vorliegende Erfindung betrifft eine Beleuchtungseinrichtung für ein Kraftfahrzeug mit einer Vielzahl von Leuchtmitteln, wobei den Leuchtmitteln verschiedenartige Lichtfunktionen in der Beleuchtungseinrichtung zugeordnet sind.

Gattungsbildende Beleuchtungseinrichtungen für Kraftfahrzeuge sind in Form von Rückleuchten bekannt, in denen Leuchtmittel aufgenommen sind, denen jeweils verschiedenartige Lichtfunktionen zugeordnet sind. Neuartige Rückleuchten von Kraftfahrzeugen sind mit LEDs ausgestattet, wobei eine Vielzahl von LEDs gleichzeitig betrieben wird, um eine Lichtfunktion zu erfüllen. Zur Erfüllung mehrerer Lichtfunktionen weisen die Rückleuchten LEDs auf, die verschiedene Farben emittieren können. Folglich werden LEDs gruppenweise betrieben, um beispielsweise ein Positionslicht, ein Blinklicht oder ein Bremslicht ein- und wieder auszuschalten. Die Rückleuchten sind dabei in Bereiche aufgeteilt, in denen die LEDs unterschiedlicher Farbe gruppenweise angeordnet sind.

Aus der DE 100 43 660 A1 ist eine Beleuchtungseinrichtung für ein Kraftfahrzeug mit einer Vielzahl von Leuchtmitteln bekannt, wobei innerhalb eines gemeinsamen Leuchtkörpers mindestens zwei LED-Matrizen unterschiedlicher Leuchtfarbe zu einer Summenmatrix angeordnet sind. Die Summenmatrix ist hinter einer Licht- oder Streuscheibe angeordnet, wobei die Licht- oder Streuscheiben so geformt oder so geschliffen oder geritzt sind, dass unterschiedliche Lichtwellenlängen auf kollektive Weise unterschiedlich gebrochen und gebündelt werden.
Ferner ist aus der JP 2006-236588 A eine Beleuchtungseinrichtung bekannt, bei der eine erste LED und eine zweite LED gemeinsam in eine Lichtoptik einkoppeln.

Die aus dem Stand der Technik bekannten Beleuchtungseinrichtungen für Kraftfahrzeuge besitzen den Nachteil, dass die Leuchtmittel verschiedenartiger Lichtfunktionen derart benachbart zueinander angeordnet sind, dass ein erheblicher Bauraum zur Aufnahme der Leuchtmittel in der Beleuchtungseinrichtung erforderlich ist. Insbesondere die matrizenartige Anordnung der einzelnen Leuchtmittel erfordert einen erheblichen Bereich, über den sich die Leuchtmittel erstrecken müssen, um die zugeordneten Lichtfunktionen zu erfüllen. Femer besitzen Beleuchtungseinrichtungen mit matrizenartiger Anordnung der LEDs den Nachteil, dass die Leuchtmittel als einzelne Lichtpunkte erkennbar sind. Eine im Wesentlichen homogen emittierende Leuchtfläche kann mit matrizenartig ausgebildeter Lichtemissionsfläche innerhalb der Beleuchtungseinrichtung nicht erreicht werden.

Es ist daher die Aufgabe der vorliegenden Erfindung, eine Beleuchtungseinrichtung für ein Kraftfahrzeug zu schaffen, in der eine Vielzahl von Leuchtmitteln verschiedenartiger Lichtfunktionen aufgenommen ist, wobei die Anordnung der Leuchtmittel einen geringen Bauraum erfordert und eine erhöhte Flexibilität ermöglicht.

Diese Aufgabe wird ausgehend von einer Beleuchtungseinrichtung für ein Kraftfahrzeug gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens ein Lichtleitkörper vorgesehen ist und die Leuchtmittel Licht verschiedenartiger Lichtfunktionen gemeinsam in den Lichtleitkörper einkoppeln und wobei der Lichtleitkörper wenigstens eine Lichtaustrittsfläche aufweist, um die verschiedenartigen Lichtfunktionen über die Lichtaustrittsfläche bereitzustellen.

Durch die Anordnung eines Lichtleitkörpers können die Leuchtmittel räumlich getrennt von der Lichtaustrittsfläche innerhalb der Beleuchtungseinrichtung angeordnet werden, so dass sowohl der erforderliche Bauraum reduziert werden kann als auch eine erhöhte Flexibilität hinsichtlich der Anordnung der Leuchtmittel innerhalb der Beleuchtungseinrichtung entsteht. Zur Bereitstellung der jeweiligen Lichtfunktion über die Beleuchtungseinrichtung muss lediglich die Lichtaustrittsfläche derart innerhalb der Beleuchtungseinrichtung angeordnet werden, dass das der jeweiligen Lichtfunktion zugeordnete Licht derart aus der Lichtaustrittsfläche heraustritt, dass dieses als Lichtfunktion der Beleuchtungseinrichtung wahrgenommen werden kann.

Die Geometrie sowie die Größe, Länge und Erstreckungsrichtung des Lichtleitkörpers kann beliebig ausgeformt sein, so dass sowohl der Lichtleitkörper als auch die Leuchtmittel an einem beliebigen Einbauort innerhalb der Beleuchtungseinrichtung aufgenommen werden können. Femer wird durch den Lichtleitkörper erreicht, dass die Leuchtmittel von der Außenseite der Beleuchtungseinrichtung nicht direkt als Lichtpunkte wahrgenommen werden können, und das Licht der jeweiligen Lichtfunktion weist über der Austrittsfläche ein im Wesentlichen homogenes Erscheinungsbild des Lichtes auf.

Eine weitere Verbesserung der Anordnung der Leuchtmittel innerhalb der Beleuchtungseinrichtung kann dadurch geschaffen werden, dass wenigstens ein Leuchtmittelträger vorgesehen ist, wobei die Leuchtmittel verschiedenartiger Lichtfunktionen gemeinsam auf dem Leuchtmittelträger angeordnet sind. Der Leuchtmittelträger ist relativ zum Lichtleitkörper derart angeordnet, dass die Leuchtmittel das ausgesendete Licht in den Lichtleitkörper einkoppeln können.

Die Leuchtmittel können entweder in einem sehr engen oder in einem sehr weiten Abstand zueinander angeordnet werden, ohne dass der Abstand der Leuchtmittel zueinander über die Lichtaustrittfläche von der Außenseite der Beleuchtungseinrichtung sichtbar wird.

Folglich ist die Integrationsdichte der Leuchtmittel innerhalb der Beleuchtungseinrichtung höher, da durch den Lichtleitkörper eine Aufweitung des lichtemittierenden Bereiches gegenüber dem Bereich der Anordnung der Leuchtmittel erreicht werden kann. Der Lichtleitkörper kann innerhalb der Beleuchtungseinrichtung derart angeordnet werden, dass die gewünschte Abstrahlfläche entsteht. Insbesondere können die vom Gesetzgeber geforderten 60 % leuchtfähigen Bereiches innerhalb der Beleuchtungseinrichtung ausgeführt werden, wobei die Anordnung der Leuchtmittel innerhalb der Beleuchtungseinrichtung die 60 % nicht erreichen müssen, da diese nicht direkt zur Erzeugung des Lichtfeldes innerhalb der Beleuchtungseinrichtung führen.

Die verschiedenartigen Lichtfunktionen können durch unterschiedliche Lichtfarben der Leuchtmittel erreicht werden. Insbesondere kann die Beleuchtungseinrichtung als

Scheinwerfer eines Kraftfahrzeuges ausgeführt werden, wobei eine erste Lichtfunktion als ein Tagfahrlicht und als ein Positionslicht ausgebildet ist. Sowohl ein Tagfahrlicht als auch ein Positionslicht wird durch weißes Licht innerhalb des Scheinwerfers gebildet. Hierfür können erste Leuchtmittel vorgesehen sein, die als Lichtfarbe weißes Licht aufweisen. Eine weitere Lichtfunktion kann durch ein Blinklicht zur Fahrtrichtungsanzeige ausgebildet sein, so dass zweite Leuchtmittel gelbes Licht emittieren. Die Bereitstellung sowohl eines Positionslichtes als auch eines Tagfahrlichtes kann über die gleichen Leuchtmittel erfolgen, wobei die Leuchtmittel lediglich mit unterschiedlichen Parametern betrieben werden, um eine verschieden ausgebildete Helligkeit zu erzeugen.

Wird ein Positionslicht eingeschaltet, so werden die Leuchtmittel mit geringerem Strom betrieben, so dass der Strom lediglich erhöht werden muss, um die Leuchtmittel zur Aussendung eines Tagfahrlichtes zu betreiben.

Zur Bereitstellung von Signallichtern verschiedener Lichtfunktionen über die Lichtaustrittsfläche des Lichtleitkörpers ergeben sich mehrere Möglichkeiten hinsichtlich der Materialauswahl des Lichtleitkörpers sowie der Anordnung der Leuchtmittel. Die Leuchtmittel können bevorzugt als LEDs ausgebildet sein, die auf dem Leuchtmittelträger aufgebracht sind. Die LEDs können sehr kleinbauend hergestellt werden, wobei LEDs mit unterschiedlichen Lichtfarben bekannt sind.

Gemäß einer ersten Ausführungsform können Leuchtmittel einer ersten Lichtfarbe bereichsweise getrennt von Leuchtmitteln einer zweiten Lichtfarbe auf dem Leuchtmittelträger angeordnet werden. Entsprechend der getrennten Anordnung der Leuchtmittel auf dem Leuchtmittelträger werden unterschiedliche Farben bereichsweise getrennt in den Lichtleitkörper eingekoppelt. Folglich kann der Lichtleitkörper eine Lichtaustrittsfläche besitzen, die einen ersten Bereich zur Aussendung einer ersten Lichtfarbe und einen zweiten Bereich zur Aussendung einer zweiten Lichtfarbe besitzt.

Eine weitere Ausführungsform der Anordnung der Leuchtmittel auf dem Leuchtmittelträger ist dadurch gegeben, dass erste Leuchtmittel einer ersten Lichtfarbe mit zweiten Leuchtmitteln einer zweiten Lichtfarbe wechselweise benachbart zueinander auf dem Leuchtmittelträger angeordnet werden. Folglich kann sowohl eine erste Lichtfarbe als auch eine zweite Lichtfarbe über der gesamten Lichtaustrittsfläche des Lichtleitkörpers ausgesendet werden.

Die Anordnung der Leuchtmittel kann auch im oder am Lichtleitkörper erfolgen. Dieser kann Befestigungsmittel umfassen, die zur Befestigung der Leuchtmittel am Lichtleitkörper ermöglichen, beispielsweise in Form von angespritzten Klipps, sodass der Leuchtmittelträger entweder nur noch zur Kontaktierung der Leuchtmittel dient oder vollständig entfallen kann.

Eine weitere Möglichkeit zur Bereitstellung verschiedener Lichtfarben über die Lichtaustrittsfläche des Lichtleitkörpers wird dadurch erreicht, dass der erste Bereich des Lichtleitkörpers und der zweite Bereich des Lichtleitkörpers verschiedenartige Materialien und/oder Farbkombinationen aufweisen. Wird ein Lichtleitkörper mit verschiedenen Material- oder Oberflächenfärbungen verwendet, können sowohl zur Bereitstellung eines Blinklichtes als auch zur Bereitstellung eines Tagfahrlichtes oder eines Positionslichtes weiße Leuchtdioden verwendet werden. Strahlen Leuchtdioden weißes Licht in einen Bereich des Lichtleitkörpers ein, der eine gelbe Färbung aufweist, so kann gelbes Licht über den Teilbereich der Lichtaustrittsfläche des Lichtleitkörpers emittiert werden. Hingegen kann durch eingestrahltes Licht weißer Lichtfarbe und einem transparenten Lichtleitkörper weißes Licht über die Lichtaustrittsfläche emittiert werden. Im Ergebnis kann ein Lichtleitkörper über einen ersten Bereich ein Blinklicht und über einen zweiten Bereich ein Tagfahrlicht und/oder ein Positionslicht bereitstellen. Hingegen können sich die genannten Bereiche auch überlappen, wenn die Leuchtdioden wechselweise beabstandet angeordnet sind und eine erste und eine zweite Lichtfarbe aussenden.

Femer sind gleiche Materialien mit unterschiedlichen Materialeinfärbungen möglich, sodass beispielsweise ein transparenter Bereich und ein gelber Bereich des Lichtleitkörpers voneinander unterschieden werden kann, obwohl der Lichtleitkörper ein durchgehend einheitliches Material aufweist, as beispielsweise durch ein mehrstufiges Spritzgussverfahren möglich ist.

Sind Grafiken, Schattierungen oder Symbole wie etwa ein Herstellermarkenzeichen auf der Lichtaustrittsfläche gewünscht, können diese beispielsweise durch eine Oberflächenbehandlung wie ein Sandstrahlen, ein Anätzen oder ein sonstiges Aufrauen oder durch Aufklebefolien etc. aufgebracht werden. Im aufgerauten Oberflächenbereich kann dann vorzugsweise der Lichtaustritt erfolgen, sodass der aufgeraute Bereich das Herstellermarkenzeichen wiedergeben kann.

Gemäß einer weiteren vorteilhaften Ausführungsform der Beleuchtungseinrichtung können Leuchtdioden zur Anwendung kommen, die jeweils wechselweise Licht verschiedener Farbe aussenden können. Derartige Leuchtdioden sind als Multimedia-Leuchtdioden bekannt und werden beispielsweise von der Firma OSRAM vertrieben. Folglich können Leuchtdioden vorgesehen sein, die sowohl weißes als auch gelbes Licht emittieren, um beispielsweise ein Positionslicht einerseits und ein Blinklicht andererseits bereitzustellen. Daher ergibt sich dann eine vorteilhafte Anordnung mehrerer Leuchtdioden unterschiedlicher Lichtfunktionen, wenn erste Leuchtdioden als Multimedia-Leuchtdioden ausgeführt sind und wahlweise weißes oder gelbes Licht emittieren. Diese können gemeinsam mit Leuchtdioden größerer Leistung auf dem Leuchtmittelträger aufgenommen sein, die weißes Licht emittieren und ein Positionslicht bereitstellen. Im Ergebnis wird über die Lichtaustrittsfläche des Lichtleitkörpers innerhalb der Beleuchtungseinrichtung ein Lichtfeld bereitgestellt, über das sowohl ein Positionslicht, ein Blinklicht, als auch ein Tagfahrlicht erzeugt wird.

Eine weitere vorteilhafte Ausführungsform der Beleuchtungseinrichtung sieht vor, dass der Lichtleitkörper eine längliche Erstreckung aufweist, wobei LEDs mit verschiedenartiger Lichtfunktion in Erstreckungsrichtung oder quer zur Erstreckungsrichtung des Lichtleitkörpers zur Einstrahlung in den Lichtleitkörper angeordnet sind. Der Lichtleitkörper kann balkenförmig oder stabförmig ausgeführt sein, wobei die verschiedenen Lichtfunktionen entweder über der gesamten Länge des Lichtleitkörpers bereitgestellt werden oder der Lichtleitkörper besitzt einen ersten Teilabschnitt, über den eine erste Lichtfunktion bereitgestellt wird und von einem zweiten Teilabschnitt einer zweiten Lichtfunktion getrennt ist. Sind die Leuchtdioden quer zur Erstreckungsrichtung des Lichtleitkörpers auf dem Leuchtmittelträger angeordnet, kann eine obere Reihe und eine zweite untere Reihe entlang der Erstreckungsrichtung vorgesehen sein, die jeweils mit Leuchtdioden gleicher Lichtfunktion ausgebildet sind.

Femer kann eine elektronische Ansteuereinheit vorgesehen sein, wobei die Leuchtmittel mit verschiedenartiger Lichtfunktion von der elektronischen Ansteuereinheit gemeinsam angesteuert werden. Erfindungsgemäß wird durch die elektronische Ansteuereinheit zur Ansteuerung mehrerer Leuchtmittel verschiedenartiger Lichtfunktionen der Vorteil erreicht, dass nicht eine Vielzahl von elektronischen Ansteuereinheiten erforderlich ist, die jeweiligen Leuchtmitteln spezifischer Lichtfunktionen zugeordnet sind.

Besonders vorteilhaft kann eine elektronische Ansteuereinheit dann eingesetzt werden, wenn diese zum wechselweisen Betrieb der Leuchtmittel verschiedenartiger Lichtfunktionen ausgebildet ist. Folglich kann eine elektronische Ansteuereinheit entweder LEDs mit einer ersten Lichtfunktion oder LEDs mit einer zweiten Lichtfunktion ansteuern. Femer kann die elektronische Ansteuereinheit einen Umschalter aufweisen, um die Ansteuerung der Leuchtmittel unterschiedlicher Lichtfunktionen zu ermöglichen. Der Umschalter kann dabei in der elektronischen Ansteuereinheit integriert sein oder baulich getrennt von der elektronischen Ansteuereinheit angeordnet werden.

Weichen die Lichtfunktionen der angesteuerten Leuchtmittel wesentlich voneinander ab, so kann ein zusätzliches Bauelement vorgesehen sein, das entweder Bestandteil der elektronischen Ansteuereinheit ist und modular in dieses einsetzbar ist oder das zusätzliche Bauelement wird separat innerhalb der Beleuchtungseinheit vorgesehen. Wesentlich voneinander abweichende Lichtfunktionen können beispielsweise dauerhaft eingeschaltetes Licht und Blinklicht oder Licht unterschiedlicher Helligkeit sein, wie dieses zwischen einem Positionslicht und einem Tagfahrlicht bekannt ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1a: eine Anordnung einer Vielzahl von Leuchtmitteln auf einem Leucht- mittelträger zur Einstrahlung in einen Lichtleitkörper, wobei die Leuchtmittel verschiedenartige Lichtfunktionen aufweisen können,
- Fig. 1b: eine Seitenansicht der Anordnung aus Figur 1a,
- Fig. 2: eine schematische Ansicht einer Vielzahl von Leuchtmitteln auf einem Leuchtmittelträger, wobei die Leuchtmittel als Multimedia-Leuchtdioden ausgeführt sind,
- Fig. 3: eine schematische Ansicht der Anordnung einer Vielzahl von Leucht- mitteln, wobei die Leuchtmittel zur Einstrahlung in einen Lichtleitkörper bereichsweise voneinander getrennt auf dem Leuchtmittelträger angeordnet sind,
- Fig. 4a: eine schematische Ansicht einer Vielzahl von Leuchtmitteln auf einem Leuchtmittelträger zur Einstrahlung in einen Lichtleitkörper, wobei Leuchtmittel verschiedener Farbe unterschiedlich auf dem Leuchtmittelträger angeordnet sind,
- Fig. 4b: eine schematische Seitenansicht der Anordnung gemäß Figur 4a,
- Fig. 4c-4f: verschiedene Ausführungsbeispiele der Anordnung von Leuchtmitteln verschiedenartiger Lichtfunktionen, wobei die Anordnung der Leucht- mittel zueinander variiert,
- Fig. 5a: eine schematische Ansicht der Ansteuerung von Leuchtmitteln verschiedenartiger Lichtfunktionen durch eine gemeinsame elektronische Ansteuereinheit und
- Fig. 5b: eine Ansicht zur Ansteuerung einer Vielzahl von Leuchtmitteln unterschiedlicher Lichtfunktion mit einem zusätzlichen Bauelement.

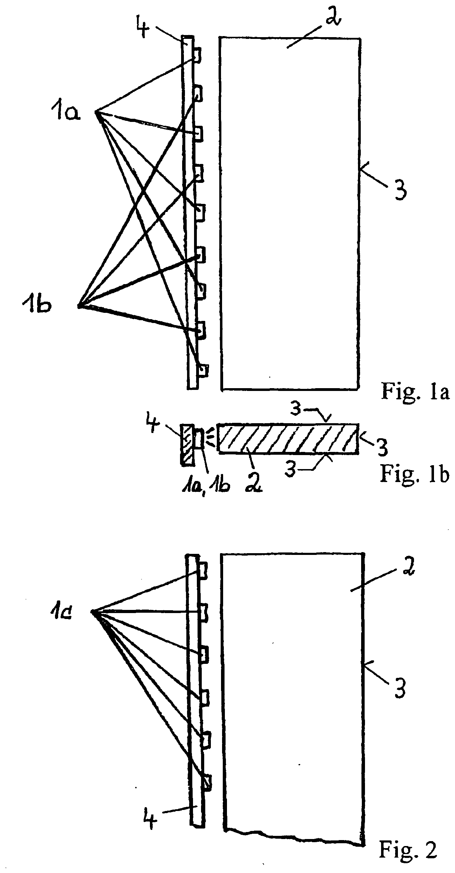

Figur 1a zeigt in einer schematischen Darstellung ein erstes Ausführungsbeispiel der Anordnung einer Vielzahl von Leuchtmitteln 1a und 1b. Die Leuchtmittel 1a und 1b besitzen verschiedenartige Lichtfunktionen, die über unterschiedliche Lichtfarben, Leuchtstärke oder Betriebsart bereitgestellt werden. Leuchtdioden einer ersten Lichtfunktion sind mit 1a gekennzeichnet, wobei Leuchtmittel mit einer zweiten Lichtfunktion mit 1b gekennzeichnet sind. Gemäß dem dargestellten Ausführungsbeispiel sind die Leuchtmittel 1a und 1b wechselweise benachbart zueinander auf dem Leuchtmittelträger angeordnet. Beispielsweise kann eine erste Lichtfarbe weißes Licht betreffen, wobei eine zweite Lichtfarbe gelbes Licht aufweist. Wird die Funktion Positionslicht und/oder Tagfahrlicht benötigt, so können die ersten Leuchtmittel 1a mit weißer Lichtfarbe betrieben werden. Wird eine Blinklichtfunktion zur Fahrtrichtungsanzeige gefordert, können die zweiten Leuchtmittel 1b mit einer gelben Farbe eingeschaltet werden, wobei die Betriebsart ein Blinklicht umfassen kann. Durch den Betrieb der Leuchtmittel 1a und 1b wird Licht in die Lichtleitkörper 2 angekoppelt und über die Austrittsfläche 3 bereitgestellt. Die Lichtaustrittsfläche 3 kann unterhalb der Licht- oder Streuscheibe der Beleuchtungseinrichtung angeordnet sein, wobei die Beleuchtungseinrichtung einen Frontscheinwerfer eines Kraftfahrzeugs darstellt. Dabei definiert die Lichtaustrittsfläche 3 einen Lichtfunktionsbereich innerhalb des Scheinwerfers, über den erfindungsgemäß sowohl Blinklicht als auch ein Positionslicht und/oder ein Tagfahrlicht bereitgestellt wird.
Figur 1b zeigt eine Seitenansicht der Anordnung der Leuchtmittel 1a und 1b auf dem Leuchtmittelträger 4. Dieser ist vor einem Lichtleitkörper 2 angeordnet, so dass das von Leuchtmitteln 1a und1b emittierte Licht in die Lichtleitkörper 2 einkoppeln kann. Dieser kann sowohl eine stirnseitige Lichtaustrittsfläche 3 besitzen, wobei auch die Seitenflächen des Lichtleitkörpers 2 Lichtaustrittsflächen 3 bilden können. Der Lichtleitkörper 2 ist dabei nicht auf einen rechteckigen Querschnitt gemäß der Darstellung begrenzt.
Figur 2 zeigt ein weiteres Ausführungsbeispiel der Anordnung von Leuchtmitteln 1c auf einem Leuchtmittelträger 4 zur Einstrahlung in einen Lichtleitkörper 2 und zur Bereitstellung des eingestrahlten Lichtes über eine Lichtaustrittsfläche 3. Gemäß diesem Ausführungsbeispiel sind die Leuchtmittel als Leuchtdioden (LEDs) ausgebildet, die wechselweise Licht in verschiedener Farbe aussenden können. Folglich ist nicht die Anordnung erster und zweiter Leuchtmittel auf den Leuchtmittelträger 4 erforderlich, so dass die Leuchtmittel 1c jeweils entweder weißes Licht für das Tagfahrlicht und/oder das Positionslicht oder gelbes Licht zur Bereitstellung eines Blinklichtes zur Fahrtrichtungsanzeige emittieren können.

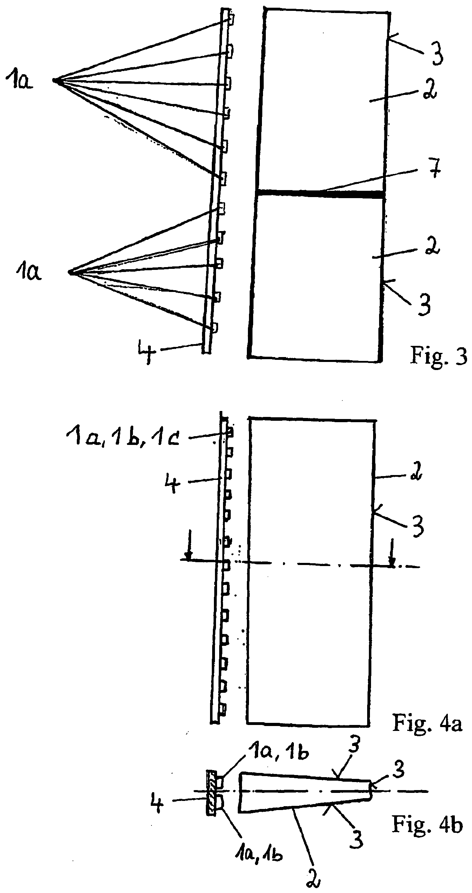

Figur 3 zeigt ein weiteres Ausführungsbeispiel der Anordnung von Leuchtmitteln 1a auf einem Leuchtmittelträger 4, wobei sämtliche auf dem Leuchtmittelträger 4 aufgenommenen Leuchtmittel 1a zur Aussendung einer gleichen Farbe ausgebildet sind. Die Leuchtmittel 1a können weißes Licht emittieren, so dass zunächst in den Lichtleitkörper 2 lediglich weißes Licht eingekoppelt wird. Gemäß diesem Ausführungsbeispiel ist der Lichtleitkörper 2 in zwei Bereiche unterteilt, wobei die Unterteilung der beiden Bereiche durch eine lichtundurchlässige Trennebene 7 erfolgt. Der oberhalb der Trennebene 7 angeordnete Bereich des Lichtleitkörpers 2 kann transparent sein, so dass über die Lichtaustrittsfläche 3 weißes Licht emittiert wird. Der unterhalb der Trennebene 7 angeordnete Bereich des Lichtleitkörpers 2 kann beispielsweise gelb eingefärbt sein, so dass trotz des eingekoppelten Lichtes weißer Farbe über die Lichtaustrittsfläche 3 eine gelbe Farbe zur Bereitstellung eines Blinklichtes emittiert wird. Durch die Lichtundurchlässigkeit der Trennebene 7 kann sich das emittierte weiße und das emittierte gelbe Licht nicht miteinander mischen.

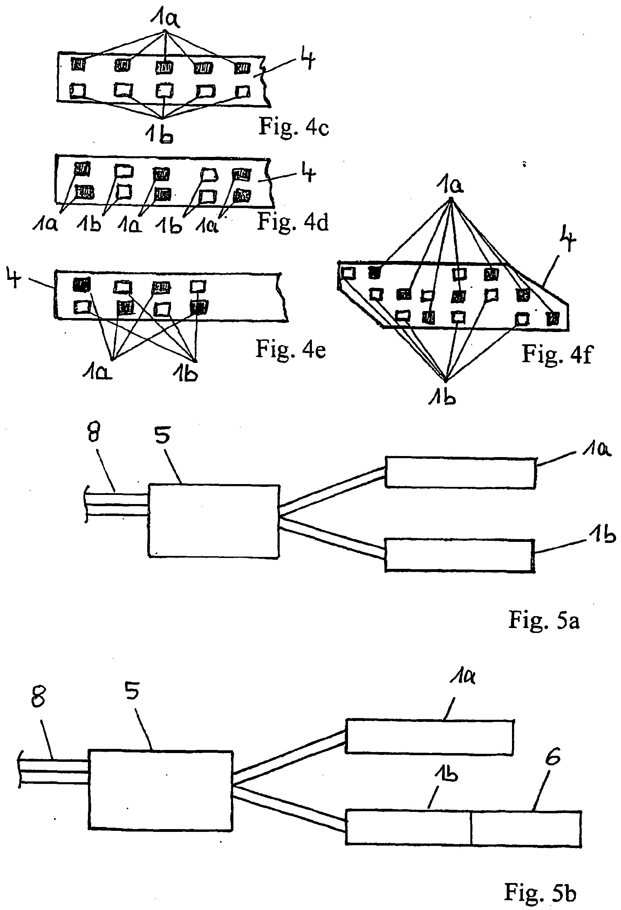

In Figur 4 a ist zunächst die Anordnung verschiedener Leuchtmittel 1a,b,c auf einem Leuchtmittelträger 4 dargestellt. Diese können Licht verschiedener Lichtfunktionen bereitstellen und in den Lichtleitkörper 2 einkoppeln, um die jeweilige Lichtfunktion über die Lichtaustrittsfläche 3 bereitzustellen. Femer ist in Figur 4a eine Querschnittsebene angedeutet, wobei der zugeordnete Querschnitt in Figur 4b gezeigt ist.
Figur 4b zeigt die Ansicht eines Querschnittes durch den Leuchtmittelträger 4 sowie den Lichtleitkörper 2. Es ist angedeutet, dass die Leuchtmittel 1a und 1b in zwei übereinander liegenden Reihen auf dem Leuchtmittelträger 4 angeordnet sind. Gemäß der Darstellung besitzt der Lichtleitkörper 2 eine trapezartige Querschnittsform, wobei die Lichtaustrittsflächen 3 sowohl stirnseitig als auch ober- und unterseitig vorhanden sind. Der Lichtleitkörper 2 kann sich 3-dimensional in einen Raum hinein erstrecken, um beispielsweise der räumlichen Kontur eines Scheinwerfers zu folgen. Femer kann der Lichtleitkörper 2 Teil der Lichtscheibe des Scheinwerfers sein, so dass die Form einer "Dickwandoptik" entsteht. In den folgenden Figuren 4c-4f sind verschiedene Anordnungen der Leuchtmittel 1a und 1b mit jeweils zugeordneten Lichtfunktionen dargestellt.
In den Figuren 4c-f ist eine jeweilige Draufsicht auf einen Leuchtmittelträger 4 gezeigt. In Figur 4c sind in einer oberen Reihe erste Leuchtmittel 1a und in einer unteren Reihe zweite Leuchtmittel 1b auf dem Leuchtmittelträger 4 angeordnet. Die ersten Leuchtmittel 1a können weißes Licht emittieren, wohingegen die zweiten Leuchtmittel 1b gelbes Licht aussenden. Die Leuchtmittel 1a und 1b können unabhängig voneinander betrieben werden, so dass beispielsweise unabhängig von einem eingeschalteten Positions- oder Tagfahrlicht eine Blinkfunktion zur Fahrtrichtungsanzeige erfüllt werden kann.
Figur 4d zeigt ein weiteres Ausführungsbeispiel zur Anordnung erster und zweiter Leuchtmittel 1a und 1b, wobei in einer übereinander liegenden Ordnung erste Leuchtmittel 1a abwechselnd zu zweiten Leuchtmitteln 1b auf dem Leuchtmittelträger 4 aufgebracht sind.
In Figur 4e ist die Anordnung der Leuchtmittel übereinander abwechselnd vorgenommen, so dass ein Leuchtmittel 1a in Querrichtung des Leuchtmittelträgers 4 mit einem Leuchtmittel 1b abwechselnd angeordnet ist.
In Figur 4f ist eine weitere mögliche Anordnung von Leuchtmitteln 1a und 1b auf einem Leuchtmittelträger 4 dargestellt. Die ersten und zweiten Leuchtmittel 1a und 1b sind derart ausgeführt, dass die Leuchtmittel 1a ein W ergeben, wobei zwischen den ersten Leuchtmitteln 1a die zweiten Leuchtmittel 1b abwechselnd angeordnet sind.
Die Figuren 5a und 5b zeigen ein Ausführungsbeispiel zur Ansteuerung der Leuchtmittel 1a und 1b durch eine elektronische Ansteuereinheit 5. Die elektronische Ansteuereinheit 5 wird über Signalleitungen 8 von der Fahrzeugelektronik angesteuert. Gemäß der Darstellung ist erkennbar, dass sowohl die ersten Leuchtmittel 1a zur Erfüllung einer ersten Lichtfunktion und die zweiten Leuchtmittel 1b zur Erfüllung einer zweiten Lichtfunktion gemeinsam durch eine elektronische Ansteuereinheit 5 angesteuert werden. Dies kann realisiert werden, wenn zum Beispiel Funktionen mit ähnlichen oder gleichen elektronischen Erfordernissen im Wechsel zueinander eingeschaltet werden müssen. Die elektronische Ansteuereinheit 5 versorgt folglich entweder die eine oder die andere Funktion durch Bestromung entweder der ersten Leuchtmittel 1a oder der zweiten Leuchtmittel 1b.

Um diese Funktion zu erfüllen, kann ein Umschalter vorgesehen sein, der innerhalb der elektronischen Ansteuereinheit 5 integriert ist. Konkret kann durch die vorgeschlagene Ansteuerung die Funktion eines Tagfahrlichtes mit der Funktion einer Blinkleuchte kombiniert werden. Sollten die elektronischen Eigenschaften der beiden Funktionen zu stark voneinander abweichen, kann durch ein zusätzliches Bauelement 6, das beispielhaft einer Gruppe der Leuchtmitteln 1b zugeordnet ist, eine Angleichung erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein. Im Ergebnis wird im Rahmen der vorliegenden Erfindung eine Lichtaustrittsfläche 3 als Funktionsbereich einer Leuchte für ein Kraftfahrzeug vorgeschlagen, die eine hohe Integrationsdichte bei einer Vielzahl von Funktionen ermöglicht.

### Bezugszeichenliste

- 1a, 1b: Leuchtmittel, LED
- 2: Lichtleitkörper
- 3: Lichtaustrittsfläche
- 4: Leuchtmittelträger
- 5: elektronische Ansteuereinheit
- 6: zusätzliches Bauelement
- 7: lichtundurchlässige Trennebene
- 8: Signalleitung

## Patentansprüche

1. Beleuchtungseinrichtung für ein Kraftfahrzeug mit einer Vielzahl von Leuchtmitteln (1a, 1b, 1c), die als Scheinwerfer des Kraftfahrzeugs ausgeführt ist, wobei den Leuchtmitten (1a, 1b, 1c) verschiedenartige Lichtfunktionen in der Beleuchtungseinrichtung zugeordnet sind, **dadurch gekennzeichnet, dass** wenigstens ein Lichtleitkörper (2) vorgesehen ist und die Leuchtmittel (1a, 1b, 1c) Licht verschiedenartiger Lichtfunktion gemeinsam in den Lichtleitkörper (2) einkoppeln und wobei der Lichtleitkörper (2) wenigstens eine Lichtaustrittsfläche (3) aufweist, um die verschiedenartigen Lichtfunktionen über die Lichtaustrittsfläche (3) bereitzustellen, und dass die Leuchtmittel (1a, 1b, 1c) verschiedenartiger Lichtfunktion gemeinsam auf einem Leuchtmittelträger (4) angeordnet sind, wobei eine erste Lichtfunktion als ein Tagfahrlicht und als ein Positionslicht und eine zweite Lichtfunktion als ein Blinklicht zur Fahrtrichtungsanzeige ausgebildet ist, und wobei weißes Licht aussendende LEDs (1a) und gelbes Licht aussendende LEDs (1b) auf dem Leuchtmittelträger (4) aufgenommen sind.

2. Beleuchtungseinrichtung nach Anspruch 1, **dadurch gekennzeichnet, dass** die Leuchtmittel (1a, 1b, 1c) verschiedenartiger Lichtfunktion zur Aussendung von voneinander unterscheidbaren Lichtfarben ausgebildet sind.

3. Beleuchtungseinrichtung nach Anspruch 2, **dadurch gekennzeichnet, dass** erste Leuchtmittel (1a) einer ersten Lichtfarbe bereichsweise getrennt von zweiten Leuchtmitteln (1b) einer zweiten Lichtfarbe auf dem Leuchtmittelträger (4) angeordnet sind.

4. Beleuchtungseinrichtung nach Anspruch 1 oder 2, **dadurch gekennzeichnet, dass** erste Leuchtmittel (1a) einer ersten Lichtfarbe mit zweiten Leuchtmitteln (1b) einer zweiten Lichtfarbe wechselweise benachbart zueinander auf dem Leuchtmittelträger (4) angeordnet sind.

5. Beleuchtungseinrichtung nach einem der vorgenannten Ansprüche, **dadurch gekennzeichnet, dass** die Leuchtmittel (1a, 1b, 1c) als LEDs (Light Emitting Diode) (1a, 1b) ausgebildet sind, die auf dem Leuchtmittelträger (4) aufgebracht sind.

6. Beleuchtungseinrichtung nach einem der vorgenannten Ansprüche, **dadurch gekennzeichnet, dass** LEDs (1a, 1b, 1c) zur jeweils wechselweisen Aussendung von Licht verschiedener Farbe ausgebildet sind.

7. Beleuchtungseinrichtung nach einem der vorgenannten Ansprüche, **dadurch gekennzeichnet, dass** der Lichtleitkörper (2) einen ersten Bereich aufweist, in den die weißes Licht aussendenden LEDs (1a) einstrahlen und wobei der Lichtleitkörper (2) einen zweiten Bereich aufweist, in den die gelbes Licht aussendenden LEDs (1b) einstrahlen.

8. Beleuchtungseinrichtung nach einem der vorgenannten Ansprüche, **dadurch gekennzeichnet, dass** der erste Bereich des Lichtleitkörpers (2) und der zweite Bereich des Lichtleitkörpers (2) verschiedenartige Materialien und/oder Farbkomponenten aufweisen.

9. Beleuchtungseinrichtung nach einem der vorgenannten Ansprüche, **dadurch gekennzeichnet, dass** der Lichtleitkörper (2) eine längliche Erstreckung aufweist, wobei LEDs (1a, 1b, 1c) mit verschiedenartiger Lichtfunktion in Erstreckungsrichtung oder quer zur Erstreckungsrichtung des Lichtleitkörpers (2) zur Einstrahlung in den Lichtleitkörper (2) angeordnet sind.

10. Beleuchtungseinrichtung nach einem der vorgenannten Ansprüche, **dadurch gekennzeichnet, dass** eine elektronische Ansteuereinheit (5) vorgesehen ist, wobei die Leuchtmittel (1a, 1b, 1c) mit verschiedenartiger Lichtfunktion von der elektronischen Ansteuereinheit (5) gemeinsam ansteuerbar sind.

11. Beleuchtungseinrichtung nach Anspruch 10, **dadurch gekennzeichnet, dass** die Leuchtmittel (1a, 1b, 1c) mit verschiedenartiger Lichtfunktion durch eine elektronische Ansteuereinheit (5) wechselweise betreibbar sind, sodass die elektronische Ansteuereinheit (5) entweder LEDs (1a) mit einer ersten Lichtfunktion oder LEDs (1b) mit einer zweiten Lichtfunktion ansteuert.

12. Beleuchtungseinrichtung nach Anspruch 10 oder 11, **dadurch gekennzeichnet, dass** die elektronische Ansteuereinheit (5) einen Umschalter aufweist, um die Ansteuerung der Leuchtmittel (1a, 1b, 1c) unterschiedlicher Lichtfunktion zu ermöglichen.

13. Beleuchtungseinrichtung nach Anspruch 10 bis 12, **dadurch gekennzeichnet, dass** die elektronische Ansteuereinheit (5) bei wesentlich voneinander abweichenden Lichtfunktionen der angesteuerten Leuchtmittel (1a, 1b, 1c) wenigstens ein zusätzliches Bauelement (6) aufweist.

## Claims

1. Illumination device for a motor vehicle with a plurality of light sources (1a, 1b, 1c) that are designed as headlamps of the motor vehicle where various light functions in the illumination device are allocated to the light sources (1a, 1b, 1c), **characterized in that** at least one light guide element (2) is provided for and the light sources (1a, 1b, 1c), operating together,
incouple into the light guide element (2) light of various kinds of light function and where the light guide element (2) features at least one light exit area (3) in order to make the various kinds of light functions available through the light exit area (3) and **in that** the light sources (1a, 1b, 1c) of various kinds of light functions are arranged together on a light source carrier (4), where one first light function takes the form of a daytime running light and of a position light and a second light function takes the form of a direction indicator light to indicate the direction of travel and where LEDs emitting white light (1a) and LEDs emitting amber light LEDs (1b) are mounted on the light source carrier (4) alternately to each other.

2. Illumination device in accordance with Claim 1, **characterized in that** the light sources (1a, 1b, 1c) of various kinds of light function are designed to emit light colors distinct from each other.

3. Illumination device in accordance with Claim 2, **characterized in that** first light sources (1a) of a first light color are, in some areas, arranged on the light source carrier (4) separately from second light sources (1b) of a second light color.

4. Illumination device in accordance with Claim 1 or 2, **characterized in that** first light sources (1a) of a first light color with second light sources (1b) of a second light color are arranged on the light source carrier (4) alternately adjacent to each other.

5. Illumination device in accordance with one of the aforementioned Claims, **characterized in that** the light sources (1a, 1b, 1c) are designed as LEDs (light emitting diodes) (1a, 1b) that are mounted on the light source carrier (4).

6. Illumination device in accordance with one of the aforementioned Claims, **characterized in that** LEDs (1a, 1b, 1c) are each designed to alternately emit light of a different color.

7. Illumination device in accordance with one of the aforementioned Claims, **characterized in that** the light guide element (2) features a first area into which the LEDs emitting white light (1a) shine and where the light guide element (2) features a second area into which the LEDs emitting amber light (1b) shine.

8. Illumination device in accordance with one of the aforementioned Claims **characterized in that** the first area of the light guide element (2) and the second area of the light guide element (2) feature different kinds of material and/or color components.

9. Illumination device in accordance with one of the aforementioned claims **characterized in that** the light guide element (2) features a longitudinal extension, where LEDs (1a, 1b, 1c) with various kinds of light function are arranged in the direction of the extension or at a right angle to the direction of the extension of the light guide element (2) for shining into the light guide element (2).

10. Illumination device in accordance with one of the aforementioned Claims, **characterized in that** an electronic actuator unit (5) is provided for, where the light sources (1a, 1b, 1c) with various kinds of light function can be actuated together by the electronic actuator unit (5).

11. Illumination device in accordance with Claim 10, **characterized in that** the light sources (1a, 1b, 1c) with various kinds of light function can be alternately operated by an electronic actuator device (5) so that the electronic actuator unit (5) actuates either LEDs (1a) with a first light function or LEDs (1b) with a second light function.

12. Illumination device in accordance with Claim 10 or 11, **characterized in that** the electronic actuator unit (5) features a change-over switch in order to facilitate actuation of the light sources (1a, 1b, 1c) of various kinds of light function.

13. Illumination device in accordance with Claims 10 through 12, **characterized in that** the electronic actuator device (5) features at least one additional component part (6) in the event of light functions of the actuated light sources (1a, 1b, 1c) that differ significantly from each other.

## Revendications

1. Dispositif d'éclairage pour véhicule automobile avec un grand nombre de sources lumineuses (1a, 1b, 1c) conçu comme projecteur du véhicule automobile, différentes technologies d'éclairage étant associées aux sources lumineuses (1a, 1b, 1c) au sein du dispositif d'éclairage, **caractérisé par le fait qu'**il est prévu au moins un guide de lumière (2) et que les sources lumineuses (1a, 1b, 1c) regroupent la lumière de différentes
technologies d'éclairage dans le guide de lumière (2) et où le guide de lumière (2) présente au moins une surface de sortie de la lumière (3) permettant d'assurer le fonctionnement des différentes technologies d'éclairage par l'intermédiaire de la surface de sortie de la lumière (3) et **par le fait que** les sources lumineuses (1a, 1b, 1c) de différentes technologies d'éclairage sont disposées de manière regroupée sur un support de source lumineuse (4), une première technologie d'éclairage étant conçue comme feu diurne et feu de position et une seconde technologie d'éclairage étant conçue comme feu clignotant pour indiquer le sens de la marche, et des diodes électroluminescentes blanches (1a) et jaunes (1b) disposées sur le support de source lumineuse (4).

2. Dispositif d'éclairage selon la revendication 1, **caractérisé par le fait que** les sources lumineuses (1a, 1b, 1c) de différentes technologies d'éclairage sont conçues pour émettre des couleurs pouvant être distinguées les unes des autres.

3. Dispositif d'éclairage selon la revendication 2, **caractérisé par le fait que** les premières sources lumineuses (1a) d'une première couleur sont disposées sur le support de source lumineuse (4) dans des zones séparées des secondes sources lumineuses (1b) d'une seconde couleur.

4. Dispositif d'éclairage selon la revendication 1 ou 2, **caractérisé par le fait que** les premières sources lumineuses (1a) d'une première couleur sont disposées en alternance avec les secondes sources lumineuses (1b) d'une seconde couleur sur le support de source lumineuse (4).

5. Dispositif d'éclairage selon l'une des revendications précitées, **caractérisé par le fait que** les sources lumineuses (1a, 1b, 1c) sont conçues comme LED (diodes électroluminescentes) (1a, 1b) montées sur le support de source lumineuse (4).

6. Dispositif d'éclairage selon l'une des revendications précitées, **caractérisé par le fait que** les LED (1a, 1b, 1c) sont conçues pour émettre alternativement une lumière de couleur différente.

7. Dispositif d'éclairage selon l'une des revendications précitées, **caractérisé par le fait que** le guide de lumière (2) présente une première zone dans laquelle rayonnent les LED qui émettent une lumière blanche (1a) et que le guide de lumière (2) présente une deuxième zone dans laquelle rayonnent les LED qui émettent une lumière jaune (1b).

8. Dispositif d'éclairage selon l'une des revendications précitées, **caractérisé par le fait que** la première zone du guide de lumière (2) et la deuxième zone du guide de lumière (2) présentent divers matériaux et/ou composants de couleur.

9. Dispositif d'éclairage selon l'une des revendications précitées, **caractérisé par le fait que** le guide de lumière (2) présente une extension allongée, des LED (1a, 1b, 1c) avec différentes technologies d'éclairage étant disposées soit dans le sens de l'extension soit perpendiculairement au sens de l'extension du guide de lumière (2) pour l'irradiation dans le guide de lumière (2).

10. Dispositif d'éclairage selon l'une des revendications précitées, **caractérisé par le fait qu'**une unité de commande électronique (5) est prévue dans laquelle les sources lumineuses (1a, 1b, 1c) avec technologies d'éclairage différentes peuvent être commandées conjointement par l'unité de commande électronique (5).

11. Dispositif d'éclairage selon la revendication 10, **caractérisé par le fait que** les sources lumineuses (1a, 1b, 1c) avec technologies d'éclairage différentes peuvent être commandées alternativement par une unité de commande électronique (5) de sorte que l'unité de commande électronique (5) commande soit des LED (1a) avec une première technologie d'éclairage soit des LED (1b) avec une seconde technologie d'éclairage.

12. Dispositif d'éclairage selon la revendication 10 ou 11, **caractérisé par le fait que** l'unité de commande électronique (5) est dotée d'un commutateur permettant la commande des sources lumineuses (1a, 1b, 1c) avec technologies d'éclairage différentes.

13. Dispositif d'éclairage selon les revendications 10 à 12, **caractérisé par le fait que** l'unité de commande électronique (5) présente au moins un élément constitutif supplémentaire (6) en cas de technologies d'éclairage nettement différentes les unes des autres des sources lumineuses commandées (1a, 1b, 1c).
